(19) Europäisches Patentamt
European Patent Office
Office européen des brevets

(11) Publication number: **0 351 118 A2**

# (12) EUROPEAN PATENT APPLICATION

(21) Application number: 89306738.9

(22) Date of filing: 03.07.89

(51) Int. Cl.4: **B32B 27/08, B65D 65/40**

A request for correction has been filed pursuant to Rule 88 EPC. A decision on the request will be taken during the proceedings before the Examining Division (Guidelines for Examination in the EPO, A-V, 2.2).

(30) Priority: 13.07.88 US 218715
02.06.89 US 360625

(43) Date of publication of application:
17.01.90 Bulletin 90/03

(84) Designated Contracting States:
AT BE CH DE ES FR GB IT LI LU NL SE

(71) Applicant: ROHM AND HAAS COMPANY
Independence Mall West
Philadelphia Pennsylvania 19105(US)

(72) Inventor: Freed, William Thayer
9 Edna Horn Drive
Stockton New Jersey 08559(US)

(74) Representative: Angell, David Whilton et al
ROHM AND HAAS (UK) LTD. European
Operations Patent Department Lennig House
2 Mason's Avenue
Croydon CR9 3NB(GB)

## (54) Multilayered structures.

(57) Multilayer structures in which two glutarimide layers of moderately good barrier properties have between them a relatively more permeably polymer layer which can impart useful structural or other characteristics, have unexpectedly good overall barrier properties.

EP 0 351 118 A2

# MULTILAYERED STRUCTURES

This invention is concerned with multilayered structures and their use as barrier layers especially in or as sheet, film or containers.

The packaging industry has long sought to develop plastics film, sheet, bottles, wrappings, and other containers which are impervious to oxygen to preserve materials contained therein. That industry has further sought to develop similar items resistant to the passage of carbon dioxide for use in maintaining the carbonation of carbonated beverages. Resistance to passage of water vapour is also important to the packaging industry.

The most useful polymers which exhibit very low values for oxygen permeability are poly(vinylidene chloride) and polymers containing vinyl alcohol, such as ethylene-vinyl alcohol copolymers containing less than about 50 mol percent ethylene units, or homopolymers of hydrolyzed poly(vinyl acetate) known as poly(vinyl alcohol).

Although both types of polymers are utilized in commerce, they have deficiencies which limit their wider use. Poly(vinylidene chloride) is thermally less stable than most polymers and is difficult to process; the barrier properties of poly(vinyl alcohol) are greatly affected by high relative humidity, and the ethylene-vinyl alcohol polymers are not optically clear. Further, the structural properties required for many applications are difficult to achieve with these polymers.

The packaging industry has also sought to prepare containers exhibiting enhanced service temperature for the hot-fill packaging of foods, sterilization prior to packaging, autoclaving to sterilize contents, and the like. Materials attractive for such heat-sensitive uses tend to have poor barrier properties.

It has been known for some time that if laminates of two or more polymers layers adequately adhered together are prepared, the polymer layer or layers having good barrier properties can effectively form a barrier. The permeability parameter for the multilayered structures can be predicted by use of the following equation:

$T_t/P_{av} = t_1/P_1 + t_2/P_2 + t_3/P_3 + *** + t_n/P_n$

where t is the thickness of each individual film, P the known permeability parameter for the polymer of that film, $T_t$ is the thickness of the total composite structure, and $P_{av}$ is the actual permeability parameter of the composite structure.

This relationship holds only if the films have no defects and if the adhesion is acceptable. If thick tie-layers are required to bond the layers, the thickness and permeability of these tie layers must be included in the equation.

Thermally stable, clear polyglutarimide polymers with improved service temperature are disclosed in US-A-4,246,374, and reduced polyglutarimide polymers are disclosed in US-A-4,727,117.

The art has described the preparation of composite structures of polyglutarimides with polycarbonates, and has described the general possibility of preparing barrier/non-barrier/barrier tri-layer laminates for packaging use.

We have now surprisingly found that a multilayer structure having outstanding barrier properties to oxygen can be prepared from a layer of polymer having certain desirable physical properties but inadequate gas barrier properties, and layers of polymer which has moderately good barrier properties, when that polymer is polyglutarimide. Such a barrier composite structure can be prepared with excellent optical properties, resistance to impact, and a service temperature sufficient for hot-fill and sterilization. Under appropriate conditions the structure is expected to be an effective barrier for carbon dioxide and water vapor. Also such a structure may be an effective barrier against other gases.

This invention provides a multilayer structure comprising three or more polymer layers adherent to one another, wherein at least two of the layers are of moderately good gas-barrier polymer, and in between these layers, is at least one layer of relatively more permeable polymer.

The gas-barrier layers are formed from a glutarimide polymer, and, more preferably, from a N-(lower alkyl)dimethylglutarimide.

The more permeable polymer or polymers layer(s) may comprise non-heat-shrinkable polymers which may be chosen to contribute particularly desired physical properties to the composite structure. A preferred, more permeable polymer layer is one of poly(carbonate), and, more preferably, of bis-phenol-A polycarbonate.

Surprisingly, the multilayer structures of this invention exhibit a resistance to gas permeation superior to equivalent thicknesses of gas-barrier polymers that are not alternated with the more permeable polymer. That is, the permeability of the composite structure is less than that predicted from the equation above.

This invention also extends to packaging articles, such as films, sheets and containers, incorporating

these structures and to processes of protecting from oxygen or moisture or other gas or vapour a substance, such as food or beverage, whose properties are degraded by contact with such gases or vapours, by enclosing the substance within packaging incorporating the multilayered structures of the invention and to processes for maintaining an inert or carbon dioxide or other atmosphere, even under pressure, by enclosing the gas in an appropriate sealed container incorporating the composite structures of the invention.

The term "mer" as used herein means a combination of elements which form a single repeating unit in a polymer. Thus the monomer ethylene ($C_2H_4$) $CH_2=CH_2$ becomes the mer ethylene ($-CH_2-CH_2-$) in polyethylene, even though the ethylenic double bond is no longer present in the polymer. The mer may be hypothetical, as in a vinyl alcohol mer present in hydrolyzed poly(vinyl acetate). More than one mer is present in a copolymer. Mers may be formed by post-polymerisation reaction on a polymer, such as in a N-methyl dimethylglutarimide mer formed by the addition of methylamine to two neighbouring mers of methyl methacrylate accompanied by the loss of two molecules of methanol.

The term "vinyl" as used herein means $CH_2=CH-$ and the term "vinylidene" as used herein means $CH_2=C<$, where the unsubstituted bond is satisfied by a group or groups other than hydrogen.

By "polymers which are moderately good gas barriers", is meant those polymers which are poorer barriers than ethylene-vinyl alcohol copolymers in their dry state and the vinylidene chloride polymers sold under the trademark Saran plastic resin. These polymers are known to be very good or excellent gas barriers. Preferably, the polymers which are moderately good gas barriers are those having an oxygen permeability of greater than about $3x10^{13}$ (cm$^3$*cm)/(cm$^2$*cm Hg*sec), more preferably greater than about $6x10^{13}$ (cm$^3$*cm)/(cm$^2$*cm Hg*sec).

The maximum oxygen permeability of the moderately good gas barrier polymers is preferably about $9x10^{12}$ (cm$^3$ *cm)/(cm$^2$*cm Hg*sec), although it is expected that polymers having higher oxygen permeability will show similarly enhanced gas-barrier properties when used in the composite structures of the invention. The preferred, moderately good gas-barrier polymer is a glutarimide polymer.

The units of oxygen permeability are (oxygen volume passing through the sample, in cm$^3$ x sample thickness, in cm)/(sample surface area, in cm$^2$x oxygen pressure differentials across the sample, in cm Hg x test time in seconds) = (cm$^3$*cm)/(cm$^2$*cm Hg*sec).

By the term "glutarimide polymer" we intend to refer broadly to the polymers containing the cyclic group or mer

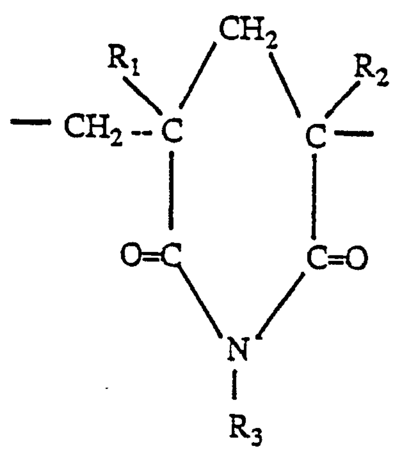

where $R_1$ and $R_2$ are hydrogen or lower alkyl, preferably both $R_1$ and $R_2$ are methyl, and $R_3$ is hydrogen, alkyl, aryl, alkaryl, or aralkyl. By the term "lower alky" we mean alkyl groups having from 1 to 8 carbon atoms, which may optionally be substituted, and we include straight-chain, branched and cyclic alkyls such as methy, ethyl, n-propyl, sec-propyl, n-butyl, isobutyl, propyl, hexyl including cyclohexyl, heptyl, octyl. Substituents which may be present on these groups include hydroxy and halogen, for example chloro and fluoro, di($C_1$-$C_8$)alkyl-amino, -COOA, -OA, and -OCOA wherein A is ($C_1$-$C_8$)alkyl. Preferably $R_3$ is alkyl of 1 to 4 carbon atoms, and more preferably methyl.

The glutarimide group may be the sole repeating unit or mer in the polymer, or the polymer may contain other mers, preferably those of a lower alkyl (meth)acrylate, and, more preferably, methyl methacrylate. Other mers, such as those from styrene, vinyl chloride, (meth)acrylic acid, (meth)acrylic anhydride, (meth)acrylamides, such as methacrylamide, N-methyl methacrylamide, N,N-dimethyl

methacrylamide, and the like, other (meth)acrylic esters, (meth)acrylonitrile, and the like may also be present. A preferred glutarimide polymer contains at least about 50% by weight mers of glutarimide, and a more preferred glutarimide polymer contains at least about 80% by weight mers of glutarimide.

The glutarimide polymer may be prepared by any convenient method. Among the methods known to those skilled in the art are the reaction at elevated temperature of methacrylic acid-methacrylic ester copolymers with ammonia, an amine, urea, or a substituted urea; the reaction of poly(methacrylic anhydride) with ammonia or an amine; the thermal reaction of a methacrylic ester-methacrylamide copolymer to form the imide ring; and the reaction in solution or in the melt of a polymer containing a high proportion of (meth)acrylic ester groups with ammonia or an amine. Preferred is the method taught in US-A-4,246,374.

The poly(glutarimide) may be post-treated to reduce or remove acid and/or anhydride groups according to the method taught in US-A-4,727,117; the reduced-acid polymers of that patent are preferred, but polyglutarimides containing acids and/or anhydrides are also useful in this invention.

The poly(glutarimide) may contain additives, such as lubricants, antioxidants, thermal stabilizers, and the like. It may also contain low levels of inorganic fillers and/or fibers, such as mica, glass fibers, and the like.

The glutarimide polymer may also be blended with other polymers with which it is known to be miscible. US-A-4,727,117 discloses an extensive list of polymers with which such acid-reduced glutarimides may be blended.

Because of the relatively good gas-barrier properties of glutarimide polymers, addition of other, more permeable polymers, either as additional components in blends or as impact modifiers, may degrade the gas-barrier of the resulting material and require a greater overall thickness of the blended material to achieve the same barrier effect as the glutarimide polymer alone.

The relatively more permeable polymer is more permeable to gases than the particular gas-barrier polymer with which it alternates in the composite structure of this invention. Each layer of the more permeable polymer may be a single polymer, a polymer blend or alloy, multiple layers of the same or different polymers, or may be the same as, or different from, other more permeable polymer layers in the composite structure.

The preferred more permeable polymers include: polycarbonates, such as those based on isopropylidene bis-phenol and sulfonyldiphenol; blends of polycarbonates with thermoplastic polyesters; the thermoplastic esters themselves, such as poly(ethylene terephthalate), poly(butylene terephthalate) and their blends and block copolymers; aromatic resins such as poly(phenylene sulfide), poly(phenylene sulfone), poly(ester-ether-ketone) and the like; polyacetals; polyamides such as nylon 6, nylon 6.6, nylon 11 and the like, including both crystalline and amorphous nylons; poly(vinyl halide)s such as poly(vinyl chloride); poly-(acrylate)s and poly(methacrylate)s such as poly(methyl methacrylate) or poly(butyl acrylate); poly(styrene) including high-impact poly(styrene) and styrene comonomers with, for example, acrylonitile or methyl methacrylate; polyolefins such as poly(propylene) and poly(ethylene). Any such polymer must be selected to be more permeable than the gas-barrier polymer. Particularly preferred as the more permeable polymer are poly(bis-phenol-A carbonate), poly(ethylene terephthalate), poly(vinyl chloride), polyethylene, polypropylene, nylon 6 and nylon 6,6. Especially preferred where a poly(glutarimide) is the gas-barrier polymer is poly(bis-phenol A carbonate).

The structures of the present invention may be formed from layers of film or sheet into a laminated, multi-layer structure in which the moderately good barrier polymer alternates with a more permeable polymer. The simplest structure of this invention is a layer of the more permeable polymer sandwiched between two outer layers of moderately good barrier polymer. A more preferred structure MP/GB/MP/GB/MP (MP = more permeable; GB = gas barrier) adds an outside layer of a more permeable polymer over each of the outer moderately good barrier polymers. Such an alternation of barrier polymer and more permeable polymer may be repeated as often as is required or desired for a particular application. That is, the multilayer polymer structure may comprise three layers or any number of layers greater than three as long as there is included a sequence in which at least one MP layer is/are sandwiched between two GB layers.

Each layer of barrier polymer may be the same as, or different from, the other barrier polymer layers, and each of the more permeable layers may be the same as, or different from, other more permeable layers, so long as they are more permeable than the adjacent barrier layers. Further, each individual layer may comprise multiple layers of the same or similar polymer.

The multilayer structure of the present invention may be formed by co-extrusion of layers, by laminating together layers of pre-formed film or sheet, or by other known techniques for making laminated structures that will be readily apparent to those skilled in the art.

The layers of the structure are adherent to one another; they may adhere as a result of being co-extruded, of being glued together with a suitable type of adhesive, or of other adhesion processes. The adhesives and the other adhesion processes may be readily selected by those skilled in the art.

The layers of the structure are preferably continuous layers, and, more preferably, have a uniform thickness. That is, they do not have discontinuities, holes, thin spots and the like.

The preferred thickness of a gas-barrier layer and of a more permeable layer is from about 0.02 mm to about 10 mm. The layers may be of equal or different thickness. The adhesive, where used, is not considered as a layer, unless it forms a continuous layer from about 0.02 to about 10 mm thick and is more permeable than the gas-barrier layer.

The structure may be biaxially oriented, uniaxially oriented or unoriented.

The uses to which such composite structures may be placed are many. Films may be used in the packaging of many foodstuffs, such as meat, snacks, boil-in-the-bag items such as frozen vegetables, and the like.

Containers suitable for the packaging of carbonated or oxygen-sensitive beverages, such as colas, ginger ale, fruit juice, and the like, may be prepared.

Containers suitable for hot-fill or sterilization may be molded from suitable injection-moulded or extruded parisons. Such containers or bottles may be used for packaging of food such as condiments, ketchup, maple syrup, and the like. They may also be used for heat-sterilized containers, such as for medical uses, for example to hold intravenously administerable fluids, and the like.

In the examples which follow, the polymers were tested using standard procedures which are summarised below. The results of the tests in the following examples are given as actual oxygen permeation, in units of oxygen volume passing through the sample, in $cm^3$/(sample surface area, in $cm^2$ oxygen pressure differential across the sample, in cm, Hg x test time in seconds) = ($cm^3$)/($cm^2$.cm Hg.sec). This differs from oxygen permeation as used earlier and used below for the predicted values, by excluding the sample thickness. Temperature is 25° C unless otherwise stated, and the term "RH" refers to relative humidity. The following materials were used in the examples below. The bis(phenol-A) carbonate, referred to herein as PC, was a commercial, extrusion-grade material having a molecular weight of 24,600 and contains no lubricants. The glutarimide polymers were made according to the procedure of US-A-4,275,374, by reacting poly(alkyl methacrylate) homopolymer or copolymer with amines or ammonia. The poly(N-methylglutarimide) is a commercial polymer made by reacting poly(methyl methacrylate) with methylamine. Poly(N-methylglutarimide) was further reacted to reduce the acid/anhydride functionality according to the procedure taught by US-A-4,727,117. For both materials, the Vicat softening temperature given is related to the degree of imidization of the polymer.

Blends prepared for use in the examples were prepared by tumble-blending pellets, usually with added thermal stabiliser. The pellets were fed to a twin-screw counter-rotating, intermeshing extruder 87 cm long, operating at a screw speed of about 100 rpm and equipped with a vacuum vent, a single-orifice, 6-mm strand die, a water bath for cooling the extruded strand and a strand pelletizer. The feed zones were set to 235° C. The melt temperature of the polymers was between 226° C and 238° C.

Laminated film structures were prepared by either co-extrusion or by pressing together individual films at elevated temperatures. The individual films were formed using a single-screw, 25.4-mm-diameter extruder having a 24:1 length-to-diameter ratio and equipped with a two-stage vacuum vent, a 152.4-mm, adjustable-thickness film die, a three-roll, heated film stack immediately adjacent to the die lips for receiving the extruded film, and a film puller and winding apparatus. The film puller speed was set to avoid any draw-down of the film. The extruder was operated at a speed of 75 rpm; the melt temperatures were usually from about 232° C to about 237° C, but were adjusted as necessary to achieve acceptable extrusion rates. The roll temperatures of the stack were, for the top and middle, 132° C, and for the bottom, 100° C. Films of 76 m to 625 µm were prepared by this method.

The co-extrusion process was carried out using three single-screw extruders equipped with Cloeren feed block and die. The extrusion temperatures were similar to those used in preparing the single films, but were adjusted to higher temperatures where necessary to achieve better adhesion.

The pressed, laminated structures were prepared by cutting the single films into squares approximately 100 by 100 mm; these were stacked against polished metal plates in a Carver press. The plates were held at a temperature of 271° C. For films having a thickness of approximately 2.5 mm, a template 2.5 by 100 by 100 mm was used, and film layers were stacked in this template. Contact pressure was applied for two minutes following mould closure, followed by one minute at 34,500 kPa. The sample and plates were removed from the press and allowed to cool in a cold press under contact pressure.

In those instances where a template was not used, the films were stacked as described above, but with a poly(ethylene terephthalate) film contacting the metal plate to serve as a release surface. In those

examples where the film layers were bonded together with adhesive, a thin layer of hot-melt adhesive was applied using a commercial hot-melt applicator, the press temperature was set to 177° C and the cycle was changed to one minute at contact pressure, one minute at 24,500 kPa, 45 seconds at 69,000 kPa, and two minutes at 138,000 kPa. The laminated film and plates were removed and allowed to cool in a cold press under contact pressure.

Oxygen permeation values were determined using a Mocon Ox-Tran 1000 tester, manufactured by Modern Controls Inc., Brooklyn Center, Minnesota, U.S.A. Films for testing were prepared as 110 mm squares, sealed into the unit, and swept, with nitrogen on both sides of the film to determine a sample base line and allow the film to equilibriate with nitrogen. Pure oxygen at one atmosphere pressure was then swept over one face of the film for the duration of the test. The nitrogen swept over the opposite face of the film contained 1-2% hydrogen; this gas mixture was conducted from the test chamber through a CouloxT nickel-cadmium, fuel-cell detector where any oxygen present burned an equivalent amount of the excess hydrogen to generate an electric current proportional to the amount of oxygen. This current, automatically corrected for the sample baseline, was continuously recorded and used to calculate the oxygen permeation value of the sample.

The test conditions during both equilibration and oxygen testing were 23° C and 0% relative humidity, unless otherwise noted.

The Examples are intended to illustrate the present invention and include Comparative Examples to demonstrate the unexpected improvement achieved by it. All percentages are by weight unless otherwise specified and all reagents are of good commercial quality unless otherwise specified.

## EXAMPLES 1-3

### Polyglutarimide/Polycarbonate/Polyglutarimide Multilayer

These examples illustrate the preparation of a multilayer structure of a low-acid glutarimide(PG)-//polycarbonate(PC)//low-acid glutarimide(PG) further containing protective outer layers of polycarbonate, and a comparison with a polycarbonate//low-acid glutarimide//polycarbonate structure. The low-acid glutarimide polymer was prepared as described in US-A-4,246,374 and had a Vicat softening temperature of 160° C.

Table 1

| Predicted and Measured Values for Multilayer Structures | | | |
|---|---|---|---|
| | | Oxygen Permeation | |
| Ex. No. | Composition and Thickness(um) | Predicted | Experimental |
| 1 | PC//PG//PC, 520.7//622.3//774.7 | 5.66 | 5.90 |
| 2 | PC//PG//PC//PG//PC, 482.6//177.8//215.9//190.5//749.3 | 9.20 | 4.72 |
| 3. | PC//PG//PC//PG//PC, 381//317.5//177.8//279.4//571.5 | 5.90 | 0.71 |

In the above table, PC indicates the polycarbonate and PG indicates the glutarimide polymer.

The predicted values are calculated from the equation above. As may be seen from Table 1, the actual oxygen permeability of the sheets of Examples 2 and 3, in which the gas-barrier layer (PG) is divided into two individual layers alternating with the more permeable layers (PC), according to the present invention, is significantly lower than the permeability of the sheet of Example 1 (which is a Comparative Example), in which the total barrier thickness is similar but the barrier layer is undivided.

## Example 4

PG/PC/PG - Pressed Film - Multilayer

This example illustrates that pressed films, as well as co-extruded films of polyglutarimide and polycarbonate exhibit unexpectedly improved oxygen barrier performance when the barrier film is applied to both sides of the more permeable material. Films of the glutarimide polymer and the polycarbonate from the same resins as used in Example 1 were separately extruded into films of nominal 150/um thickness. The films were laminated as PG/PC/PG and pressed as described above. The film did not separate on handling. Barrier properties to oxygen were measured as in Example 1; thickness values were measured on the laminated film.

| | | Oxygen Permeation | |
|---|---|---|---|
| Ex. No. | Composition and Thickness(μm) | Predicted | Experimental |
| 4 | PG//PC//PG, 101.6//177.8//101.6 | 1.75 | 1.46 |

## EXAMPLES 5-8

These examples present data for permeability of oxygen in monolithic films for calculations for Examples 9-10. The polyglutarimide is an acid-reduced polymer having a Vicat softening point of about 160° C and is similar to the polyglutarimide of Example 1.

The polycarbonate is the same as described in Example 1. The poly(methyl methacrylate) is a homopolymer of molecular weight 150,000. It was processed into film on a 2.54 cm. single-screw Killion extruder equipped with a film die and pull rolls. Extruder speed was 62 rpm. The settings were feed 218° C, barrel 227° C, adaptor 218° C, die 224° C, and pull rolls 118° C. It is designated "PMMA".

The polypropylene is a commercial film; it is believed to be a homopolymer. It is designated "PP".

TABLE 2

| Measured Values for Monolithic Structures of Oxygen Permeation | | | |
|---|---|---|---|
| Ex.No. | Composition | Thickness, micrometers | Permeation (x$10^{12}$) $cm^3/(cm^2.cm$ HG.sec) |
| 5 | PG | 206<br>185 | 4.52<br>4.20<br>(4.36) |
| 6 | PC | 228<br>241<br>241 | 167.5<br>171.7<br>155.1<br>(164.8) |
| 7 | PP | 317.5<br>304.8<br>317.5<br>304.8 | 89.5<br>89.6<br>93.8<br>87.7<br>(90.1) |
| 8 | PMMA | 215.9<br>215.9 | 6.05<br>6.02<br>(6.03) |

EXAMPLES 9 - 10

These examples demonstrate the improved and unexpected barrier performance against oxygen when the polyglutarimide is present in a three-layered structure on both sides of a polymer of lesser or somewhat equivalent permeability. Laminates were prepared and tested as described above. Samples were purged with nitrogen for ca. 350 hours, then conditioned with oxygen for about 450 hours before the test was completed.

TABLE 3

| Measured and Predicted Values for Composite Structures | | | |
|---|---|---|---|
| Ex.No. | Composition and Thickness (µm) | Oxygen Permeation x$10^{10}$ $cm^3/(cm^2.cm$ HG.sec) | |
| | | Predicted | Measured |
| 9 | PG/PMMA/PG, 137/109/152 | 18.4 | 12.6 |
| 10 | PG/PP/PG, 165/759/185 | 17.4 | 12.5 |

EXAMPLES 11-15

These examples demonstrate the unexpected improvement in permeation when the polyglutarimide is layered on both sides of a polymer of poorer barrier performance to oxygen. Further multi-layer composites were prepared by co-extrusion as described in Example 1 from the polycarbonate and polyglutarimides

used in Example 1. Thicknesses of the various layers were determined by cutting 5-8 micrometer sections with a glass knife from the co-extruded laminates at a point near where the sample for barrier measurements was taken. The thicknesses of the various layers were then determined by optical microscopy, using the difference in index of refraction to distinguish the various layers. An average of three measurements was used for the calculation of predicted barrier properties.

TABLE 4

| Ex.No. | Composition and Thickness (µm) | Oxygen Permeation x$10^{10}$ $cm^3/(cm^2.cm$ HG.sec) | |
|---|---|---|---|
| | | Predicted | Measured |
| 11 | PC/PG/PC, 154.9/139.7/127 | 42.3 | 41.7+/-6.1 |
| 12 | PC/PG/PC, 104.1/94.0/86.3 | 42.4 | 39.7+/-2.4 |
| 13 | PG (3 separate films) 114.3, 132, 137.2 | | 14.7+/-0.45 |
| 14 | PC/PG/PC/PG/PC, 78.7/20.3/45.7/20/3/99 | 84.3 | 69.9+/-5.9 |
| 15 | PC/PG/PC/PG/PC, 152.4/30.5/78.7/35.6/134.6 | 84.7 | 68.0+/-4.7 |

Examples 11, 12 and 13 are Comparative Examples outside the scope of this invention.

EXAMPLE 18

A laminate of two layers of the polyglutarimide of Example 2 surrounds a layer of poly(butyl acrylate) of approximately similar thickness. The poly(butyl acrylate) by itself is a poor barrier material, similar to polypropylene of Example 7. The laminate exhibits better barrier properties of oxygen than does a monolithic layer of glutarimide of thickness equivalent to the sum of the two barrier layers used herein.

EXAMPLES 19-21

In a manner similar to that used to prepare the three-and five- multilayered structures disclosed above, four-, five-, six- layer and above structures were prepared from alternating layers of polyglutarimide and polycarbonate.

## Claims

1. A multilayer structure comprising at least three polymer layers, at least two of which are of moderately good gas barrier polymer and at least one of which is/are of relatively more permeable polymer, the structure containing at least one sequence of layers in which at least one relatively more permeable layer is located between two or more moderately good barrier layers and in which the polymer of at least the moderately good barrier layers in the said sequence comprises glutarimide units of the formula:

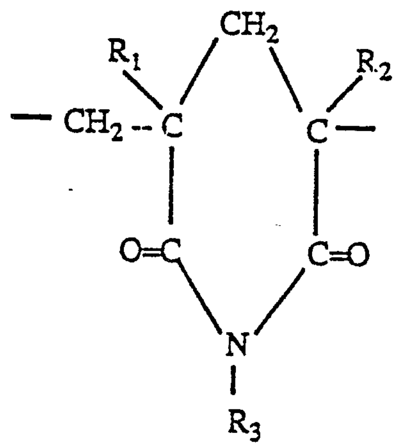

wherein $R_1$ and $R_2$ are hydrogen or, optionally substituted, ($C_1$ to $C_8$) alkyl and $R_3$ is hydrogen, alkyl, aryl, alkenyl or aralkyl.

2. A structure according to claim 1 wherein the glutarimide units comprise N-($C_1$-$C_8$ alkyl)-dimethylglutarimide units.

3. A structure according to any preceding claim wherein the polymer of at least one relatively more permeable layer comprises polycarbonate, thermoplastic polyester, aromatic resin, polyacetal, poly(amide), poly(vinyhalide), poly(acrylate), poly(methacrylate), or poly(olefin) or a blend thereof.

4. A structure according to Claim 4 wherein the polycarbonate comprises poly(bis-phenol-A carbonate) or the polyester comprises poly(ethylene terephthalate) or poly(butylene terephthalate), or the polyolefin comprises polyethylene or polypropylene or the polyamide comprises a nylon, preferably nylon 6 or nylon 6.6.

5. A structure according to any preceding claim wherein the thickness of each layer is from 0.02 mm to 10 mm.

6. A structure according to any preceding claim wherein the structure is biaxially oriented, uniaxially oriented or unoriented.

7. A film, sheet or other packaging article having a structure according to any preceding claim.

8. A container, such as a bottle, or other package of which at least a part comprises a multilayer structure according to any of claims 1 to 6.

9. The use of a multilayer structure according to any of claims 1 to 6, optionally in the form of film or sheet or in or as a container, to protect a degradable substance from gas or vapour, especially oxygen or moisture, or for maintaining an inert or carbon dioxide or other atmosphere in a container.